# EUROPEAN PATENT APPLICATION

(11) **EP 2 366 465 A1**
(43) Date of publication of application: **21.09.2011**
(21) Application number: 11158447.0
(22) Date of filing: 16.03.2011
(51) Int. Cl.: B08B 3/02, B08B 3/04

(54) **Washing machine for animal cages**

(30) Priority: 18.03.2010 IT MI20100443
(71) Applicant: IWT S.r.L., 21020 Casale Litta (IT)
(72) Inventor: Savoia, Luciano, 21047 SARONNO (IT); Vitali, Michele, 21021 ANGERA (IT); Iametti, Christian, 21040 SUMIRAGO (IT)
(74) Representative: Lualdi, Lorenzo

(57) **Abstract**

This invention concerns a washing machine (1), particularly for washing out the cages and tanks used in animal laboratories, comprising a wash chamber (2) into which a load of the items to be washed can be inserted and equipped with multiple nozzles (3a) and a water collection reservoir (4) situated in the floor of the wash chamber (2). It is characterised by the fact that it comprises a single hydraulic circuit (10) suitable for carrying out, using the system of supplying water to the load, the entire wash and rinse cycles, without the need for two separate wash and rinse circuits.
The object of this invention is also the washing method carried out by this machine.

## Description

This invention is a washing machine, more specifically a washing machine suitable for washing out the cages used in animal facilities, equipped with a new type of hydraulic circuit.

It is known that for scientific experiments cages or tanks, mostly made from plastic materials, are used in the research facilities to keep the animals in controlled conditions.

These cages or tanks typically comprise a base tray closed with a suitable cover. These tanks, which have reached an elevated grade of sophistication, must, as expected, be properly washed on a regular basis, in relation to the type of animal and the experiments carried out.

Currently the tanks are washed out using a washing machine in which whole racks holding multiple disassembled tanks can be inserted. ldeally these racks are fitted with wheels so that they can be pushed into the washing machine by the operator and then removed, and more shelves, generally tilted, are provided so that a large number of tanks can be held on each rack.

In order to optimise the washing operations, more than one rack can be inserted into the washing machine, depending on the size of the system and the racks. The machines in question are consequently known in the sector as "rack washers" but, as previously mentioned, the purpose of the machine is to properly clean the many tanks positioned on these racks.

For efficient cleaning, washing machines with a hydraulic circuit that uses mains water in the washing operation are widely used within the sector. This hydraulic circuit allows the water coming from the mains to collect in a water tank in which, productively, a controlled quantity of detergent is dissolved; the actual amount is dependent upon the level of "dirt" or contamination of the animal tanks.

This type of washing machine connects the tank used to collect clean water, via a hydraulic pump, to multiple pipes, situated within the machine chamber, which in turn hold a number of nozzles. In the most successful machines on the market, developed by this applicant, on each of the two side walls of the washer's internal chamber there are two to four or more horizontal washing pipes or shafts, each of which holds several nozzles in different positions, so that the combined action of the jets coming from the various nozzles achieves the desired standard of cleaning. These washing shafts can, advantageously and as in well-known state-of-the-art machines, rotate around their own longitudinal axes so that the nozzle jets cover a greater area.

In the well-known machines of this type, the wash water accumulates in the water tank, used to collect clean water and also known as the wash tank. During the washing phase the water is transferred by a special washer pump onto the load and ends up in the reservoir where it is recovered by a second pump, called a return pump, and taken back to the wash tank. The reservoir is only drained at the end of the cycle (after the rinsing phase) when any residual water left in the reservoir is emptied directly into the drainage system.

In general the well-known machines of this type are fitted with two separate circuits, one for the wash water, containing detergent, and one for the rinse water, which must be clean water. Therefore there is a special wash water tank where the water is mixed with detergent, and a special tank for clean water, which is used as rinse water.

As previously mentioned the rinse water is clean water and therefore taken from its tank by a rinse pump, or a pump specially designed only for clean water, transferred through pipes and nozzles to the load, namely the racks inserted into the wash chamber.

Therefore in the well-known machines of this type there is no contamination between the clean rinse water and the dirty water, containing detergent, used for washing.

The rinse water sprayed out by the nozzles and onto the load then falls, as previously indicated, into the reservoir beneath the floor of the wash chamber and is recovered from this reservoir by a return pump that takes it back to the wash tank, where it can be mixed with clean water and fresh detergent for the next wash. Reusing the rinse water allows a significant quantity of water to be saved at each wash cycle.

The tank for the wash water, which, as we recall, is mixed with detergent, is always kept full and therefore if the water that is brought to the wash tank by the return pump, or more specifically the rinse water recovered from the reservoir by the return pump, is in excess the overfill is emptied out into the drainage system whilst still diluting the concentration of dirt, but also of detergent, in the wash tank. Therefore, before starting the next wash cycle, a dosing pump tops up the concentration of detergent in the wash tank.

Therefore well-known washers of this type are normally equipped with a water drainage system comprising a recycling tank to hold the waste water recovered from a previous wash, which is then returned to the wash tank, where it can be mixed with clean water and fresh detergent for the next wash or an intermediate rinse so that clean water coming from the mains does not have to be used for every phase.

These well-known state-of-the-art machines therefore present a certain complexity in the hydraulic circuit comprising, as previously mentioned, two completely separate circuits for wash water containing detergent, and rinse water, which must be clean water.

This complexity of the hydraulic circuit results in a certain overall cost of the machine, which not only comprises two separate tanks for washing and rinsing, but must also be fitted with, as previously mentioned, an entire piping and nozzle circuit for washing and a second separate piping and nozzle circuit for rinsing. The complex structure of the machine not only results in greater manufacturing costs but also more components that are subject to wear and tear and/or require careful maintenance, such as, for example, in the case of centrifugal pumps. Then the presence of several pumps also leads to greater energy consumption by the machine, which takes in a lot of power during the wash cycle.

All these construction aspects of the well-known washing machines, even though on one hand responsible for the commercial success of these machines as their performance is extremely high, still impose limitations on the job at hand as clients, either due to limited research laboratory space that therefore implies a smaller number of animal tanks to be washed or other demands to contain the costs of purchasing and running the washing machines, still want a speedy washing process for which they require a machine that is structurally simpler, cheaper to buy and to use, both in regard to necessary maintenance and the electricity consumed.

These results have now been achieved by a washing machine comprising a single hydraulic circuit for washing and rinsing.

The main aim of this invention is therefore to offer a washing machine that has the aforementioned advantages of structural simplicity, economic productivity and maintenance, and less energy consumption.

Within this context, the purpose of the invention is to offer a washing machine equipped with a single hydraulic circuit that is able to both wash and rinse using the same piping and nozzle system without the risk of contaminating the rinse water with the wash water.

To achieve this result a washing machine has been developed that is equipped with a hydraulic circuit in which the reservoir acts as the water storage tank and is able to carry out complete drainage of the reservoir at the end of each phase, of washing and/or rinsing, thereby eliminating the risk of contamination between the two fluids, which never come into contact with each other. According to this invention the washing machine can therefore use a single hydraulic circuit for wash water and for rinse water.

Another aim of this invention is therefore to offer a hydraulic circuit that guarantees complete and rapid drainage of the reservoir in the wash chamber.

The final aim of this invention is to offer a hydraulic circuit that allows the washing machine reservoir to be emptied in a simple and reliable manner.

This purpose, and these and other aims that will become more apparent following a detailed description of this invention supplied by way of a non-limiting example, are achieved by a washing machine comprising a wash chamber, for insertion of the items to be washed, fitted with multiple nozzles and a water collection reservoir positioned underneath the floor of this wash chamber, and characterised by the single hydraulic circuit that can carry out, using the same nozzles, both the washing and rinsing of the items.

According to this invention the washing machine is also characterised by the fact that it includes the means for draining the reservoir of the wash tank comprising at least one hydraulic pump connected to a manifold for the collection of water coming from this reservoir, at least one collection tank for waste water connected to this hydraulic pump and, connected to the collection tank, at least one extra tank in turn connected to the manifold for collection from the reservoir, with the extra tank equipped with the means to create a vacuum.

Further features as well as further advantages of the present invention will become apparent from the following description of embodiments as shown in the annexed drawings, which are supplied by way of non-limiting example, wherein:
figure 1 shows an overall perspective view, partially disassembled, of the washing machine that is the object of this invention;
figure 2 shows a perspective view of one particular section of figure 1, a part of the hydraulic circuit fitted in the washing machine, according to this invention;
figure 3 shows a side view, partially disassembled, of a section of the hydraulic circuit of the washing machine that is the object of this invention;
figure 4 shows an enlarged view of part of the hydraulic circuit visible in figure 3;
figure 5 shows a schematic view of the means to supply water to the load, including the bars and jets fitted inside the wash chamber;
figure 6 shows a side view of part of the means to supply water to the load shown in figure 5.

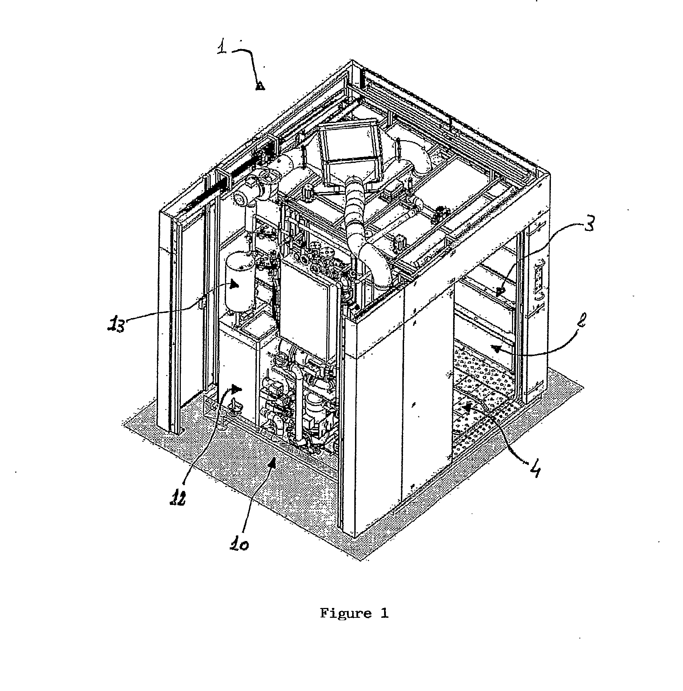

With specific reference to figure 1, the object of this invention is a washing machine, generically identified with reference number **1**, comprising a wash compartment or chamber **2** into which can be inserted racks holding the items to be washed. For this purpose, the washing chamber **2** is generally equipped with at least one frontal opening for access by personnel and insertion of the racks and, generally at the far end of the side walls, multiple nozzles **3a** for diffusion in the chamber of the washing liquid, in general constituted by water mixed with a controlled amount of a suitable detergent. According to state-of-the-art knowledge, in order to effectively hit the items held on the racks the nozzles 3a are supported on one or more nozzle 3a- supporting rods 3, through which pass one or more feed pipes.

According to this invention the washing machine is also characterised by a particular conformation of manifolds, bars and outlet nozzles, as illustrated in more detail further on.

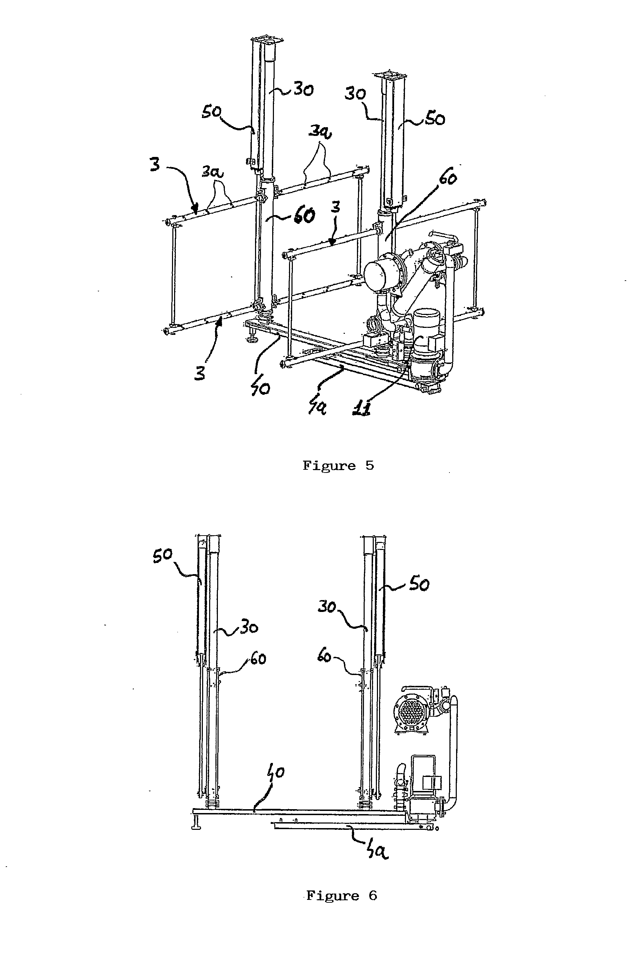

Moving on to the description of the wash chamber, at the bottom, parallel to the chamber floor, there is a collection trough **4** equipped with at least one drainage collector **4a**, shown in more detail in the figure 5 schematic drawing, which collects the water coming from the nozzles during the wash and/or rinse cycle that falls onto the bottom of the chamber.

Thanks to the convenient conformation, and in particular inclination, of the surface of the reservoir, the wash and/or rinse water is collected in the drainage collector **4a**.

According to this invention the washing machine therefore comprises one hydraulic circuit that is able to carry out, using the same feed manifolds and the same nozzles, both washing and rinsing of the items inserted into the wash chamber, using the reservoir itself as the only storage tank for wash water and for rinse water.

In order to be able to eliminate the two separate circuits, one for washing and the other for rinsing, it is therefore necessary at the end of washing and before introducing rinse water into the chamber that the reservoir is completely empty of wash water to avoid contaminating the rinse water.

In order to obtain this result, according to this invention the washing machine comprises one hydraulic circuit, generically identified with reference number **10**, comprising a hydraulic pump **11** interconnected by an drainage collector **4a** to the collection trough , and by a suitable means of feeding water to the nozzles takes the fluid to the load, meaning the machine load, i.e. the items inserted into the wash chamber of the machine.

This hydraulic pump **11** is positioned parallel to the outlet manifold **4a** of the floor reservoir so that it can work by drawing water from the drainage collector **4a** and then proceeding with recirculation of the water to feed the water supply for the washing and rinsing phases.

At the end of the wash phase, for example, the hydraulic circuit 10 of the washer system according to this invention allows water collected in the collection trough , always drawn by the pump **11**, to be collected in a special water storage tank, identified in the drawing with reference number **12**.

In this storage tank for water at the end of the wash phase, or at the end of the rinse phase, the pump **11** pours out most of the water drawn from the collection trough .

It is estimated that the hydraulic pump **11**, suitably positioned and sized, is able to thrust into the tank **12** around 90% of the wash water that collects in the collection trough **4**.

Although numerous studies have been conducted in attempts to optimise the operation of the hydraulic pump by suitably scaling the reservoir, the outlet manifold and the relative position of the hydraulic pump in respect to these elements, it has not been possible to prevent cavitations around the hydraulic pump when the quantity of water still present in the reservoir reduces, thereby also reducing the hydrostatic head the pump.

In order to use the same feed circuit and the same nozzles for both washing and rinsing, it is imperative, as mentioned, to prevent the clean water that fills the collection trough **4** at the start of the rinse cycle from becoming contaminated by the dirty water used for washing and still present in the reservoir.

It is therefore necessary that the action of draining the reservoir carried out by the centrifugal pump **11** be 100% efficient, and that all the water present in the reservoir is extracted before the start of the rinse phase.

To provide some data that are indicative of the problem it is highlighted that at the end of the draining of the reservoir carried out by the centrifugal pump there may still be around 30 litres or more of dirty water. The need to completely empty the reservoir is therefore not insignificant in terms of good machine performance or keeping dead time during the wash cycle to a minimum; it is also necessary for complete drainage of the residual water in the reservoir to be carried out within a short space of time.

The washing machine according to this invention comprises, for this purpose, an extra tank **13** connected to the aforementioned water storage tank **12**. In the preferred construction shown in the attached figures, this extra tank **13** is positioned above the storage tank **12**, so that the water reaching the extra tank 13 falls due to gravity, through the opening of a special valve in the pipe connecting the two tanks, into the storage tank **12**.

This extra tank **13** is in turn connected, by a suction pipe **13a**, to the connection pipe **14** that interfaces with the drainage collector 4a substantially connected to the centrifugal pump **11**.

A suction pipe **13a** is inserted at a certain point along the length of this connection pipe **14** for connection to the extra tank **13**.

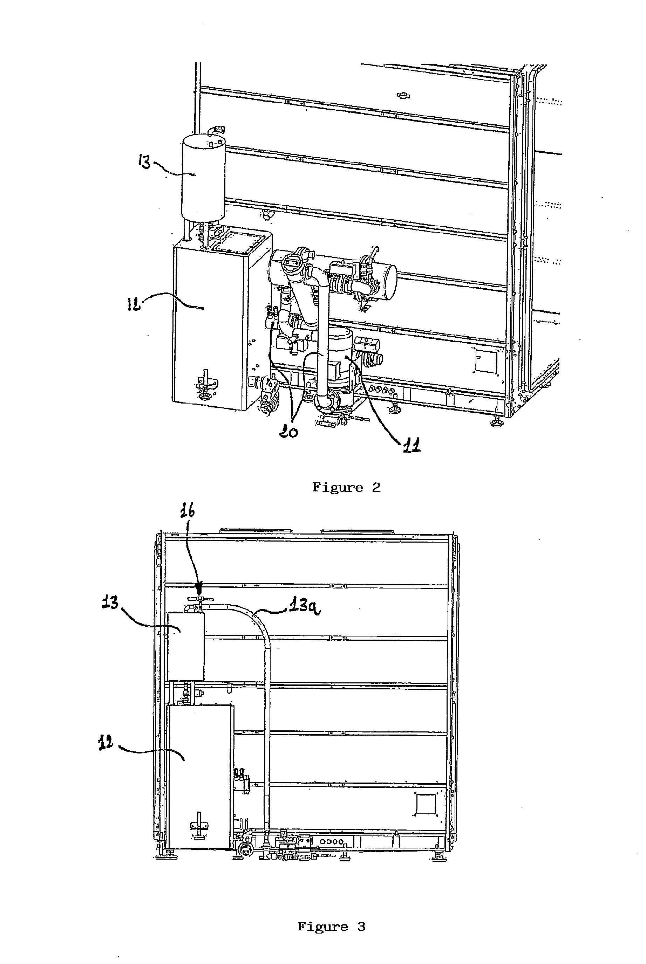

The centrifugal pump **11** is then in turn connected to the storage tank **12** via an outlet pipe, identified on the schematic drawing in figure 2 with reference number **20**. This outlet pipe **20** can be selectively closed by shutter valves.

Thanks to the inclusion of the shutter valves, when the pump **11** is operating in suction mode to fill the storage tank **12** the suction pipe **13a** is closed, and the valve on the pipe connecting the extra tank **13** to the storage tank **12** is also closed.

This extra tank **13** is equipped with the means **16** to create an internal vacuum. These means **16** to create the vacuum may be advantageously constituted by a vacuum generator, such as Venturi, which uses compressed air from the network available to the user to create the vacuum within the extra tank **13**.

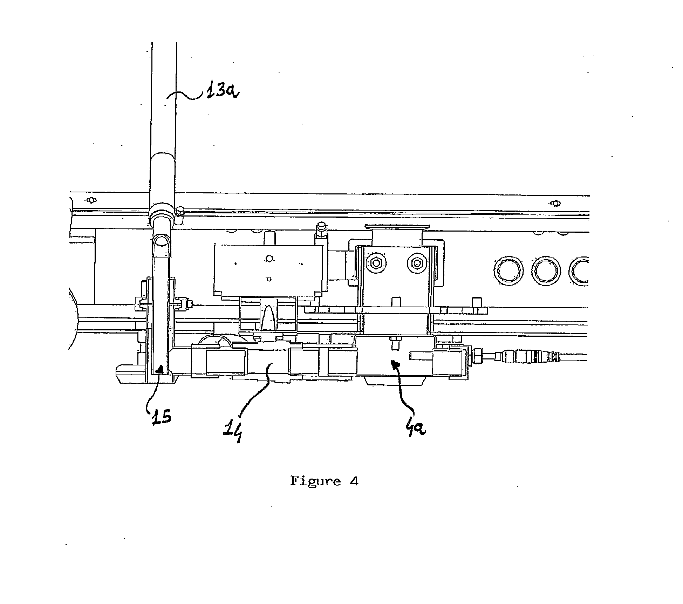

As it is possible to see in the attached figures, particularly in the enlargement in figure 4, connected to the join between the suction pipe **13a** and the connection pipe **14** there is a section **15** for the collection of drained fluid, which facilitates the suction of the fluid by the pipe **13a** to create the vacuum in the tank **13**.

The operation of the washing machine described up until this point is therefore the following.

When the operator switches on the machine to start the wash cycle, the hydraulic network introduces clean water into the wash chamber collection trough **4**. The wash water that has entered the collection trough **4** is then recovered by the centrifugal pump **11**, always via the drainage collector **4a**, which recirculates the water between the collection trough 4 and the feeding means, comprising the rods **3** and relative nozzles **3a**, to carry out the washing of the load. During the wash cycle the water can be advantageously recirculated several times between the reservoir and the nozzles, topping up the water with detergent as necessary by adding it directly to the reservoir wash water.

In this way the centrifugal pump **11** continuously recirculates the water to feed the manifolds **30** on the rods 3 by drawing the wash water from the collection trough 4 and thrusting it, through the nozzles on the rods **3**, onto the load.

A special tank dispenses, through special dosing pumps, the detergent directly into the wash water collected in the collection trough **4**, and the pump **11** therefore recirculates wash water containing detergent up until the end of the wash phase.

Furthermore, in recirculating the wash water by drawing it from the collection trough **4** to transport it to the rods **3** and wash nozzles, it is intended for the water to pass through a heat exchanger to raise the temperature to the desired values and thereby make the washing action more effective.

According to a preferred embodiment of the present invention, the bar and nozzle system streamlines the operation by using less bars than is typical in traditional washing machines, and optimises the feed circuit as shown in greater detail in figures 5 and 6.

In accordance with this preferred embodiment of the feeding means, the centrifugal pump **11** draws water from the drainage collector **4a** and forces it into the nozzles supported on the rods **3** through a main delivery pipe **40**, essentially horizontal, which takes the water to two pipes on the rods **30**, essentially vertical. The water, thrust by the pump **11**, therefore passes through the pipes 30, is channelled into the rods **3** which branch away from the pipes **30**, and finally arrives at the nozzles and is sprayed out onto the load.

The rods **3** are vertically moveable as they are attached to a mobile device **60** basically comprising an external hollow cylinder coaxial to this pipe **30**. The mobile devices **60** are guided in their vertical stroke by the pipes coming from the rods **30**, and each one is activated to move vertically by a pneumatic actuator **50**.

In this way the nozzles, moving vertically several times during the course of a wash cycle, efficiently and completely cover the load with their jet, without the need for more bars rotating around their own axes as is typical in traditional washing machines.

Thanks to the particular structure of the device holding the bars, which is illustrated here by way of example, the washing machine according to this invention has a further advantage that lies in the elimination of flexible joints and piping, generally made from polymeric or elastomeric materials, to transfer the water to the wash shafts.

Eliminating the flexible piping resolves first and foremost the problem of wear and tear of these components that, particularly due to continual exposure to an aggressive environment, deteriorate rather rapidly.

Furthermore, the number and layout of the bars and nozzles has been optimised thanks to the fact that the washing machine according to this invention does not require two separate circuits for washing and rinsing. It is therefore possible for all the nozzles fitted on the bars to reach the load both during washing and rinsing. Returning to the description of the operation of the machine that is the object of this invention, at the end of the wash cycle the wash water, which has fallen to the floor of the chamber, collects in the collection trough **4** and the pump **11** is activated to draw the water from the drainage collector 4a and transport it, through the outlet pipe **20** to the wash water storage tank **12**.

In the storage tank the wash water is generally cooled to below 55°C and treated in order to control the pH, which must be between 7 and 9 before the water can be emptied into the drains.

As mentioned, thanks to the configuration of the drainage collector 4a and the positioning of the centrifugal pump **11**, the pump itself is able to draw from the reservoir around 90% of the water present at the bottom of the wash chamber. During the operation of the centrifugal pump the valves on the suction pipe **13a** and on the pipe that connects the extra tank **13** with the storage tank **12** are closed, and therefore a situation of negative pressure or a "vacuum" is created in the extra tank **13** using the appropriate means to create the vacuum **16**.

When the centrifugal pump **11** starts to cavitate, due to the vacuum in the extra tank **13**, it is sufficient to open the shutter valve on the suction pipe **13a** for the water still present in the reservoir and in the drainage collector 4a to be "sucked" into the extra tank **13** through the connection pipe **14** and the suction pipe **13a**. This completely empties out, within a few seconds, the remaining 28-30 litres still remaining in the reservoir when the suction of the pump **11** is no longer effective. Once the reservoir has been completely emptied, to this regard it should be noted that the phase of emptying the reservoir using the suction created by the vacuum system is a timed phase, it is possible to open the shutter valve on the connection between the extra tank **13** and the storage tank **12**, allowing the wash water drawn by the vacuum system to fill up the storage tank **12**.

As known, the water collected in the tank **12** is then treated and emptied out into the drains.

Thanks to the hydraulic circuit that has been illustrated up until this point, the collection trough 4 is efficiently and completely emptied of wash water and it is therefore possible to proceed with a change of water by filling the reservoir again with clean water for the next phase of rinsing.

This shows how the washing machine, particularly one that is used to clean devices for holding animals in research facilities, according to this invention reaches its proposed aims and objectives.

In particular, it shows how the washing machine according to this invention comprises an extremely simplified hydraulic circuit compared to the hydraulic circuits that well-known state-of-the-art washing machines are equipped with.

It particularly illustrates how the washing machine according to this invention comprises a simple hydraulic circuit, which makes the washing machine itself more compact and economical, both in terms of overall cost and subsequent running and maintenance costs. The simplicity of the washing machine according to this invention makes it ideal for use in circumstances where the size of the facility, and therefore the number of animal tanks to be cleaned on a regular basis, do not justify the costs associated with a traditional machine.

Furthermore, the washing machine according to this invention, due to the characteristic simplicity of the hydraulic circuit, requires less power to function, translating into lower consumption of electricity and reduced running costs. Numerous modifications may be carried out by experts in the field within the scope of protecting this invention.

The protection of the claims, therefore, should not be limited to the illustrations or the preferred constructions shown in the description by way of example, but rather the claims should include all patentable innovations that can be attributed to this invention, including all characteristics that would be considered as such by an expert in the field.

## Claims

1. Washing machine (1) for washing containment devices for laboratory animals, of the type comprising a washing chamber (2) suitable for inserting a machine load of devices to be washed and equipped with a plurality of nozzles (3a) and a water collection trough (4), also connected to the mains, inserted in the floor of said washing chamber, a further thank storing a detergent and connected to said water collection trough (4), **characterized in that** it comprises a single hydraulic circuit (10) suitable for performing the entire washing and rinsing cycle using the same means of feeding (3, 3a, 30, 40) water to the machine load.

2. Washing machine (1) according to previous claim, **characterized in that** said hydraulic circuit (10) comprises at least one hydraulic pump (11) that is in selective communication with said trough (4) via a drainage collector (4a), with said means of feeding (3, 3a, 30, 40) water to the machine load and with a water accumulation tank (12).

3. Washing machine (1) according to previous claim, **characterized in that** said hydraulic circuit (10) also comprises a supplementary tank (13) connected to said accumulation tank (12) with which it can be selectively placed in communication, said supplementary tank (13) comprising means (16) for internally creating a vacuum and connected to said drainage collector (4a) via means of connection (13a, 14).

4. Washing machine (1) according to previous claim, **characterized in that** said means of connection of said supplementary tank (13) to said drainage collector (4a) comprise an inlet duct (13a) joined to a connection pipe (14) connected to said drainage collector (4a).

5. Washing machine (1) according to previous claim, **characterized in that** said means for creating a vacuum comprise a Venturi-type vacuum generator connected to the user's compressed air system.

6. Washing machine (1) according to any of the previous claims, **characterized in that** said means of feeding (3, 3a, 30, 40) water to the machine load comprise at least one main delivery pipe (40) in communication with said pump (11), said main pipe being in hydraulic communication with one or more pipes (30) of substantially vertical rods and one or more rods (3) each supporting a plurality of nozzles (3a).

7. Washing machine (1) according to previous claim, **characterized in that** each of said rod pipes (30) support a vertically mobile assembly (60) constituted by an external hollow cylindrical element coaxial with said rod pipe (30) to which said rods (3) are connected.

8. Washing machine (1) according to previous claim, **characterized in that** each of said mobile assemblies (60) is driven by a pneumatic actuator (50).

9. Washing method, for washing containment devices for laboratory animals, comprising the following phases:
- prepare a washing machine comprising a washing chamber (2) suitable for having a machine load of devices inserted for washing and equipped with a plurality of nozzles (3a) and a water collection trough (4) inserted in the floor of said washing chamber,
- fill said trough (4) with clean water from the mains,
- feed said nozzles (3a), recycling the water bath present in said trough (4),
- during the washing, add detergent to the water bath,
- at the end of the washing phase, completely empty said trough (4), proceeding to fill an accumulation tank (12) for treating the water to be emptied down the drain,
- refill the trough (4) again with clean water for rinsing,
- feed said nozzles (3a), recycling the water bath present in said trough (4), thereby carrying out the rinsing, and
- at the end of the rinsing phase, completely empty the trough (4).

10. Washing method according to previous claim, **characterized in that** the phase of emptying said trough (4) is carried out at least partially via suction from a tank in which a vacuum has been created.
